Europäisches Patentamt

European Patent Office

Office européen des brevets

(11) Publication number: **0 120 664**
**B1**

(12) **EUROPEAN PATENT SPECIFICATION**

(45) Date of publication of patent specification: **06.05.87**

(21) Application number: **84301857.3**

(22) Date of filing: **19.03.84**

(51) Int. Cl.⁴: **B 62 D 55/28**

(54) Track link adhesion pad assembly.

<table>
<tr><td>(30) Priority: <b>30.03.83 GB 8308828</b></td><td>(73) Proprietor: <b>The Secretary of State for Defence in Her Britannic Majesty's Government of the United Kingdom of Great Britain and Northern Ireland Whitehall London SW1A 2HB (GB)</b></td></tr>
<tr><td>(43) Date of publication of application: <b>03.10.84 Bulletin 84/40</b></td><td></td></tr>
<tr><td>(45) Publication of the grant of the patent: <b>06.05.87 Bulletin 87/19</b></td><td>(72) Inventor: <b>Elder, James William 37 Apple Close Reading Berkshire RG3 6UR (GB)</b> Inventor: <b>Parker, Robert Anthony 1 Foxhill Crescent Maultway Camberley Surrey (GB)</b></td></tr>
<tr><td>(84) Designated Contracting States: <b>CH DE FR GB IT LI NL SE</b></td><td></td></tr>
<tr><td>(56) References cited: <b>CH-A- 86 667 DE-A-1 605 521 DE-C- 203 896 GB-A- 794 074 GB-A-2 017 021 US-A-3 261 646</b></td><td>(74) Representative: <b>Beckham, Robert William et al Procurement Executive Ministry of Defence Patents 1A(4), Room 2014 Empress State Building Lillie Road London SW6 1TR (GB)</b></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to adhesion pads for attachment to the track links of tracked vehicles.

It is known to increase the grip of tracked vehicles on man-made surfaces such as metalled or concrete roads by attaching adhesion pads to the track links. Known pads comprise solid rubber blocks fixed to the track links by bolts anchored to metal plates bonded to the bases of the blocks, by slotting the blocks into retaining guides in the track links or by direct bonding to the track links. DE—C—203,896, for example, disclosed a crawler track having track links in the form of a open-topped boxes into which interchangeable adhesion pads are inserted. The pads are raised above the track links to prevent the track links contacting the road. The edges of the ground engageable faces of such adhesion pads are vulnerable to tearing the sharp stones or similar objects: if the vehicle is required to manoeuvre on stony terrain as well as man-made roads the pads will wear especially rapidly. Further, because these pads are able to deform throughout most of their volume they heat up under the repeated application of the vehicle's weight when the vehicle is moving over any relatively firm surface. This rise in temperature reduces the strength of the pads and their resistance to wear.

An adhesion pad assembly is known in accordance with the prior art portion of claim 1 (DE—A—1,605,521) in which an adhesion pad is encompassed by a steel encasement which supports the pad at its outside edges. The encasement encompasses the pad for only part of its height so that it is able to yield elastically when the pad is set down on any local high spot. Consequently, if the adhesion pad strikes a stone or the like at the edge of the pad such an encasement yields leaving the edge unsupported and therefore exposed to tearing by the stone.

According to the present invention there is provided an adhesion pad assembly for attachment to a track link of a tracked vehicle comprising a resilient adhesion pad having a ground engageable face and an encasement encompassing the adhesion pad, the encasement having sidewalls of a material of greater tear strength than the material of the adhesion pad and edges flush with the edges of the ground engageable face, characterised in that the encasement includes a base in contact with the adhesion pad, the encasement (16) confining the adhesion pad at all surfaces other than at the ground engageable face, and that the ground engageable face has a central portion proud of the edges of the sidewalls.

The invention as claimed is intended to largely overcome the disadvantages of the prior art. It solves the problem of how to provide an adhesion pad assembly having an adhesion pad which is prevented from deforming throughout most of its volume and has its edges protected from tearing by sharp stones and the like, as follows. Because the adhesion pad is confined by the base of the encasement and laterally confined by the sidewalls which are fixed to the base, the edges of the ground engageable face and the edges of the sidewalls are held flush when the edge strikes a stone or the like. The encasement provides a large degree of protection to the edges of the pad against tearing whilst maintaining the pad in contact with the ground so that it supports substantially all the load exerted on the adhesion pad assembly. Because the encasement confines the adhesion pad laterally, the pad can deform in the region of the ground engageable face only and so heats up less when the vehicle is in motion than a similar, but unencased, adhesion pad.

The adhesion pad may be injection moulded into the encasement or performed and bonded into place. The encasement may conveniently have a base integral with the encasement walls with metal plates set into the base during casting to provide anchorages for bolts by which the adhesion pad assembly can be attached to the track link. Alternatively, the encasement may be cast to fit retaining guides in the track links or the encasement moulded directly onto the track link.

In a preferred embodiment the adhesion pad assembly is formed from several, integrally moulded encasements to form a compartmentalised structure with an adhesion pad in each encasement. The additional walls of this structure act as stiffening members allowing the encasement to be manufactured with sufficient rigidity substantially to prevent lateral deformation of the adhesion pad under load whilst having walls that need be no thicker than are necessary to provide the required amount of protection against damage by stones. Each encasement may be provided with stiffening members between the base and the walls.

Preferably, the encasement is made of nylon and the adhesion pad of solid, natural rubber.

Because the adhesion pad is dome-shaped the impact of the encasement on hard surfaces when the vehicle is moving is reduced thereby reducing impact cracking of the encasement.

An embodiment of the invention will now be described by way of example only with reference to the accompanying drawings of which:—

Figure 1 is a perspective view of a track link adhesion pad assembly having three solid rubber adhesion pads located in a compartmentalised structure comprising three integrally moulded encasements;

Figure 2 is a plan view of the compartmentalised structure of Figure 1;

Figure 3 is a longitudinal section on the line III—III of Figure 2;

Figure 4 is a transverse section on the line IV—IV of Figure 2;

Figure 5 is a transverse section on the line V—V of Figure 2; and Figure 6 is an end elevation of the compartmentalised structure of Figure 1 viewed in the direction VI of Figure 1.

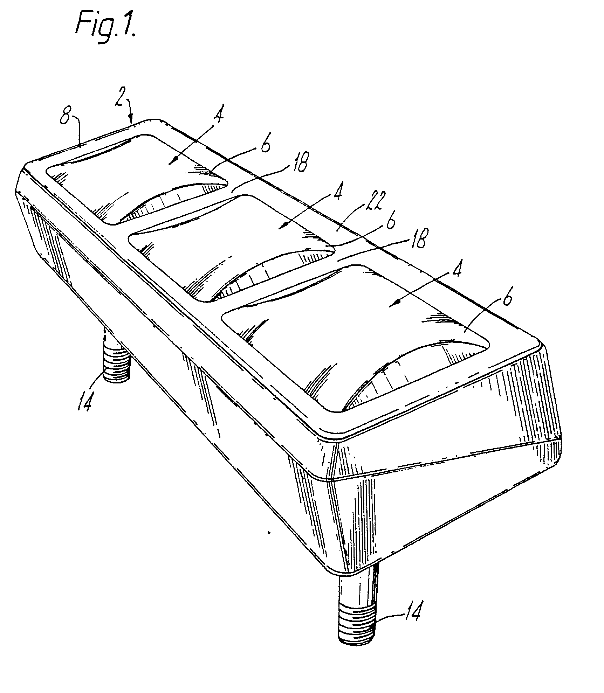

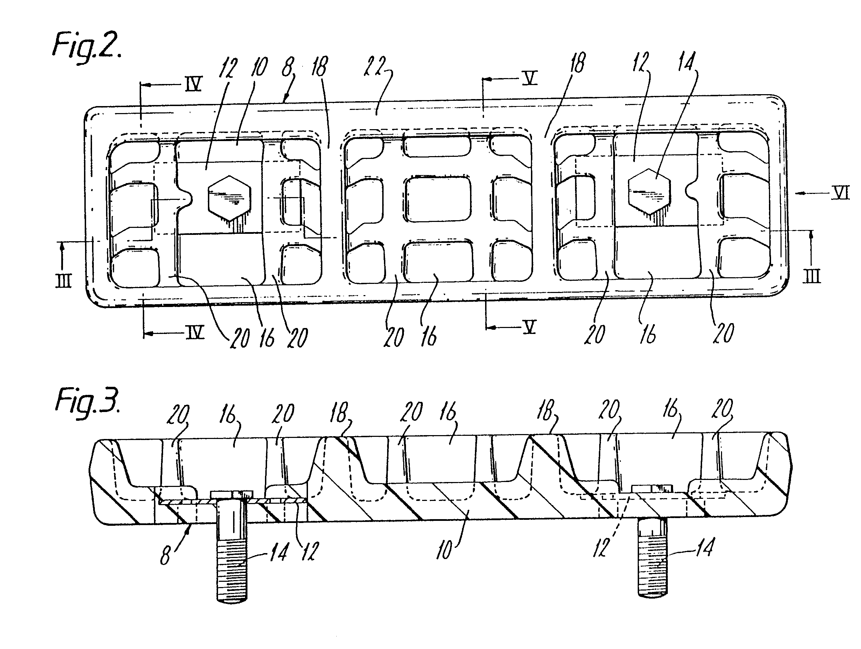

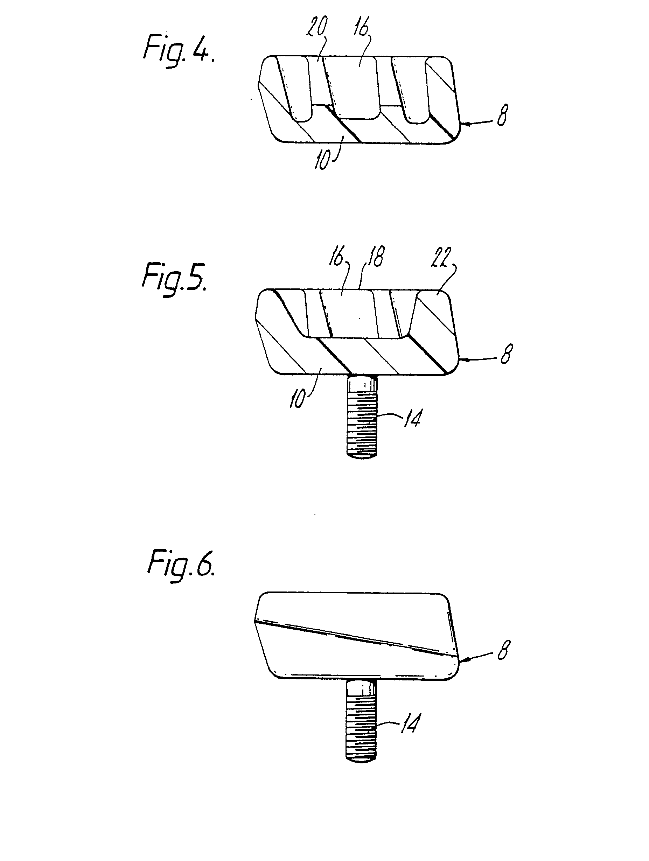

There is shown in Figure 1 a track link adhesion pad assembly 2 having three resilient natural rubber pads 4 with ground engageable faces 6 that have been injection moulded into a nylon compartmentalised structure 8 comprising three integrally moulded encasements 16 as shown in detail in Figures 2, 3, 4, 5 and 6. The encasements 16 have been cast with a common, integral base 10 in which have been set two metal plates 12 to provide anchorages for two fixing bolts 14. The encasements 16 are provided with additional rigidity by stiffening ribs 20.

The ground engageable faces 6 of the adhesion pads 4 are moulded to stand proud of the encasements 16 to reduce the initial impact damage to the encasement 16 in use after fixing to a track link shown).

Whichever edge of the adhesion pad assembly 2 strikes the ground first is the edge most likely to be damaged by sharp stones. The compartmentalised structure 8 is therefore provided with a wall 22 that is thicker than the remaining walls of the encasements, the adhesion pad assembly 2 being attached to the track link so that the wall 22 strikes the ground first when the vehicle is moving forwards.

An adhesion pad assembly according to the present invention has a greater shear strength than an unclad adhesion pad so the adhesion pad assembly can be made with an adhesion pad having a smaller ground engageable face whilst still being able to support the shear stresses generated between the vehicle and the ground. This can result in a considerable weight saving.

Because the adhesion pad of the present invention does not heat up as much as an unclad adhesion pad, materials having good adhesive qualities but whose strengths deteriorate rapidly with increasing temperature may now be used.

## Claims

1. An adhesion pad assembly for attachment to a track link of a tracked vehicle comprising a resilient adhesion pad (4) having a ground engageable face (6) and an encasement (16) encompassing the adhesion pad (4), the encasement having sidewalls (18, 22) of a material of greater tear strength than the material of the adhesion pad (4) and edges flush with the edges of the ground engageable face (6), characterised in that the encasement (16) includes a base (10) in contact with the adhesion pad, the encasement (16) confining the adhesion pad (4) at all surfaces other than at the ground engageable face (6), and that the ground engageable face (6) has a central portion proud of the edges of the sidewalls (18, 22).

2. An adhesion pad as claimed in claim 1 in which the base (19) is integral with the sidewalls (18, 22).

3. An adhesion pad assembly as claimed in either one of claims 1 and 2 in which the encasement (16) is provided with stiffening members (20) interconnecting the base (10) and the side walls (18, 22) thereof.

4. An adhesion pad as claimed in any one of preceding claims in which the base (10) is provided with attachment means (12) whereby the adhesion pad assembly (2) is attachable to the track link.

5. An adhesion pad assembly as claimed in any one of the preceding claims in which the encasement (16) has first and a second opposite sidewalls the first sidewall being thicker than the second sidewall.

6. An adhesion pad assembly as claimed in any one of the preceding claims characterised in that it has at least two encasements (16) having a common sidewall (8).

7. An adhesion pad as claimed in any one of the preceding claims in which the sidewalls (18, 22) are a nylon and the adhesion pad is a rubber.

## Patentansprüche

1. Haftpolsteranordnung zur Befestigung an einem Kettenglied eines Kettenfahrzeugs, mit einem elastischen Haftpolster (4), das eine bodenberührende Fläche (6) aufweist, und einem das Haftpolster (4) umschließenden Rahmen (16) mit Seitenwänden (18, 22) aus einem Material mit gegenüber dem Material das Haftpolsters (4) größerer Zerreißfestigkeit und mit bezüglich der Ränder der bodenberührenden Fläche (6) bündigen Kanten, dadurch gekennzeichnet, daß der Rahmen (16) eine mit dem Haftpolster in Berührung stehende Basis (10) aufweist und der Rahmen (16) das Haftpolster (4) an allen seinen Seiten mit Ausnahme der bodenberührenden Fläche (6) umschließt, und daß die bodenberührende Fläche (6) einen bezüglich der Kanten der Seitenwände (18, 22) erhabenen Mittelbereich aufweist.

2. Haftpolsteranordnung nach Anspruch 1, wobei die Basis (19) mit den Seitenwänden (18, 22) einteilig ist.

3. Haftpolsteranordnung nach einem der Ansprüche 1 und 2, wobei der Rahmen (16) mit Aussteifungsteilen (20) ausgebildet ist, welche die Basis (10) und die Seitenwände (18, 22) miteinander verbinden.

4. Haftpolsteranordnung nach einem der vorhergehenden Ansprüche, wobei die Basis (10) mit Befestigungsmitteln (12) versehen ist, so daß die Haftpolteranordnung (2) an dem Kettenglied befestigbar ist.

5. Haftpolsteranordnung nach einem der vorhergehenden Ansprüche, wobei der Rahmen (16) gegenüberliegende erste und zweite Seitenwände aufweist und die erste Seitenwand dicker als die zweite Seitenwand ist.

6. Haftpolsteranordnung nach einem der vor-hergehenden Ansprüche, dadurch gekennzeich-net, daß sie mindestens zwei Rahmen (16) mit einer gemeinsamen Seitenwand (8) aufweist.

7. Haftpolsteranordnung nach einem der vorhergehenden Ansprüche, wobei die Seitenwände (18, 22) aus Nylon und das Haftpolster aus Gummi ist.

## Revendications

1. Elément à patin d'adhérence destiné à être fixé à un élément de chenille d'un véhicule à chenilles, comprenant un patin (4) d'adhérence élastique, à face (6) pouvant venir en contact avec le sol, et un caisson (16) enserrant ce patin, ce caisson présentant des parois latérales (18, 22) en une matière ayant une résistance à l'arrachement plus grande que la matière du patin (4) et des bords qui affleurent les bords de la face (6) pouvant venir en contact avec le sol, élément caractérisé en ce que le caisson (16) comporte un fond (10) en contact avec le patin, ce caisson (16) enserrant ce patin sur toutes ses surfaces autres que la face (6) pouvant venir en contact avec le sol, et en ce que cette face (6) présente une partie centrale saillante par rapport aux bords des parois latérales (18, 22).

2. Elément à patin d'adhérence selon la revendication 1, dans lequel le fond (10) fait corps avec les parois latérales (18, 22).

3. Elément à patin d'adhérence selon l'une ou l'autre des revendications 1 et 2, dans lequel le caisson (16) est muni d'éléments de raidissement (20), qui relient son fond (10) et ses parois latérales (18, 22).

4. Elément à patin d'adhérence selon l'une quelconque des revendications précédentes, dans lequel le fond (10) est muni d'éléments de fixation (14) grâce auxquels cet élément (2) peut être fixé à l'élément de chenille.

5. Elément à patin d'adhérence selon l'une quelconque des revendications précédentes, dans lequel le caisson (16) a des première et seconde parois latérales opposées, la première étant plus épaisse que la seconde.

6. Elément à patin d'adhérence selon l'une quelconque des revendications précédentes, caractérisé en ce qu'il comporte au moins deux caissons (16) ayant une paroi latérale (18) commune.

7. Elément à patin d'adhérence selon l'une quelconque des revendications précédentes, dans lequel les parois latérales (18, 22) sont en "Nylon" et le patin (4) d'adhérence est en caoutchouc.

Fig.1.

Fig.2.

Fig.3.

0 120 664

Fig. 4.

Fig.5.

Fig.6.